# EUROPEAN PATENT APPLICATION

(11) **EP 4 582 593 A1**
(43) Date of publication of application: **09.07.2025**
(21) Application number: 23860348.4
(22) Date of filing: 29.08.2023
(51) Int. Cl.: C25B 9/23, C25B 1/04, C25B 9/00, C25B 13/08

(54) **MEMBRANE ELECTRODE ASSEMBLY FOR WATER ELECTROLYSIS TANK**

(30) Priority: 30.08.2022 JP 2022136732
(71) Applicant: Toppan Holdings Inc., Tokyo 110-0016 (JP)
(72) Inventor: CHINONE, Hiroyuki, Tokyo 110-0016 (JP); MORIOKA, Hiroyuki, Tokyo 110-0016 (JP)
(74) Representative: Hoffmann Eitle
(86) International application number: PCT/JP2023/031242
(87) International publication number: WO 2024/048586

(57) **Abstract**

A membrane electrode assembly 6 for a water electrolysis cell includes a polymer electrolyte membrane 1 having a first main surface 1A and a second main surface **1B,** a first electrode catalytic layer 2 disposed to the first main surface 1A of the polymer electrolyte membrane **1,** a second electrode catalytic layer 3 disposed to the second main surface 1B of the polymer electrolyte membrane **1,** an annular outer peripheral film 4 disposed to surround an outer peripheral surface of the polymer electrolyte membrane **1,** and a first adhesive film 5A having a substrate layer 51 and an adhesive agent layer 52. The first main surface 1A of the polymer electrolyte membrane 1 has a first annular non-covered section 1AN that is not covered with the first electrode catalytic layer 2 along an outer periphery of the first main surface, and the adhesive agent layer 52 of the first adhesive film 5Ais adhered to the first annular non-covered section 1AN of the polymer electrolyte membrane 1 and to a main surface 4A of the outer peripheral film 4 at the same side as the first main surface 1A of the polymer electrolyte membrane 1.

## Description

### [Technical Field]

The present invention relates to a membrane electrode assembly for a water electrolysis cell.

### [Background Art]

In recent years, moves to use hydrogen, which is usable as CO₂ free energy that can be generated from various resources, as primary energy have accelerated toward achievement of becoming carbon neutral. Especially, a method of performing electrolysis of water using renewable energy is seen as a promising method for producing hydrogen.

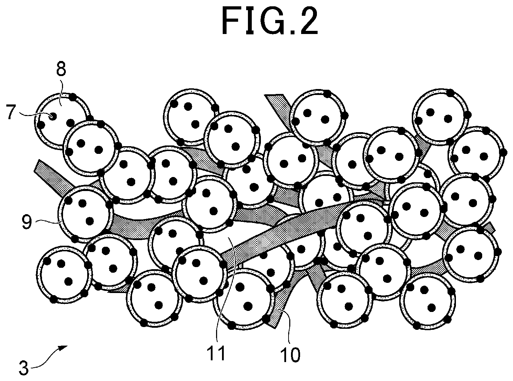

As a method of water electrolysis, alkaline water electrolysis and proton exchange membrane (PEM) water electrolysis are generally known. Particularly, proton exchange membrane water electrolysis is attracting attention as a method enabling miniaturization due to highly efficient operation. A representative configuration of a proton exchange membrane water electrolysis apparatus includes a membrane electrode assembly (Fig. 2) in which an electrode catalytic layer is disposed on both surfaces of a proton-conducting polymer electrolyte membrane, as well as collectors and terminal plates outside the membrane electrode assembly (see PTL 1).

### [Citation List]

### [Patent Literature]

PTL 1: JP H3-74670

### [Summary of the Invention]

### [Technical Problem]

In order to enhance sealing properties against liquid in a membrane electrode assembly or a water electrolysis cell apparatus including a membrane electrode assembly, it is conceivable to use, as part of a gasket, the peripheral region not covered with an electrode catalytic layer in a polymer electrolyte membrane.

However, since a polymer electrolyte membrane is an expensive material, and the peripheral region not covered with an electrode catalytic layer in a polymer electrolyte membrane that does not contribute to a reaction such as electrolysis in the first place, the above-described configuration to use a polymer electrolyte membrane as part of a gasket is not necessarily an adequate configuration.

The present invention has been made in view of the above-described problem, and has as its object to provide a membrane electrode assembly for a water electrolysis cell which can reduce the amount of a polymer electrolyte membrane used, while maintaining sealing properties against liquid.

### [Solution to Problem]

[1] A membrane electrode assembly for a water electrolysis cell including:
   a polymer electrolyte membrane having a first main surface and a second main surface;
   a first electrode catalytic layer disposed on the first main surface of the polymer electrolyte membrane;
   a second electrode catalytic layer disposed on the second main surface of the polymer electrolyte membrane;
   an annular outer peripheral film disposed to surround an outer peripheral surface of the polymer electrolyte membrane; and
   a first adhesive film having a substrate layer and an adhesive agent layer, in which
   the first main surface of the polymer electrolyte membrane has a first annular non-covered section that is not covered with the first electrode catalytic layer along the outer periphery of the first main surface, and
   the adhesive agent layer of the first adhesive film is adhered to the first annular non-covered section of the polymer electrolyte membrane and to a main surface of the outer peripheral film at the same side as the first main surface of the polymer electrolyte membrane.
   (Effects) According to the above-described configuration, the outer peripheral film in a state of being assembled to a water electrolysis cell can function as part of a gasket structure to prevent liquid from leaking to the outside between a pair of separators. Therefore, compared to the previously, liquid sealing properties can be maintained while suppressing the amount of the polymer electrolyte material used in the gasket structure. Further, since the outer peripheral film and the annular non-covered section are fixed with the adhesive film, handleability of the membrane electrode assembly improves when, for example, assembling the membrane electrode assembly to a water electrolysis cell.
[2] The membrane electrode assembly for a water electrolysis cell according to [1], further including a second adhesive film having a substrate layer and an adhesive agent layer, in which
   the second main surface of the polymer electrolyte membrane has a second annular non-covered section that is not covered with the second electrode catalytic layer along the outer periphery of the second main surface, and
   the adhesive agent layer of the second adhesive film is adhered to the second annular non-covered section of the polymer electrolyte membrane and to a main surface of the outer peripheral film at the same side as the second main surface of the polymer electrolyte membrane.
   According to the above-described optical properties, the outer peripheral film and the annular non-covered section are fixed with the adhesive film on both sides, and therefore handleability of the membrane electrode assembly further improves when, for example, assembling the membrane electrode assembly to a water electrolysis cell.
[3] The membrane electrode assembly for a water electrolysis cell according to [1] or [2], in which the outer peripheral film has a thickness that is within ±10% of the thickness of the polymer electrolyte membrane.
   According to the above-described configuration, a height difference between the outer peripheral film and the polymer electrolyte membrane can be reduced, and therefore the outer peripheral film and the polymer electrolyte membrane can be fixed with higher adhesion by the adhesive film.
[4] The membrane electrode assembly for a water electrolysis cell according to any one of [1] to [3], in which the adhesive film has a peeling strength of 0.3 N/25 mm or more with a polyimide film.
   According to the above-described configuration, the adhesion is sufficient, and therefore peeling of the adhesive film caused by deformation or the like of the polymer electrolyte membrane hardly occurs, and the configuration of the membrane electrode assembly is easily maintained.
[5] A water electrolysis cell including the membrane electrode assembly for a water electrolysis cell according to any one of [1] to [4].

### [Advantageous Effects of the Invention]

According to the present invention, there can be obtained a membrane electrode assembly for a water electrolysis cell in which the amount of the polymer electrolyte membrane used is small.

### [Brief Description of the Drawings]

Fig. 1 is a cross-sectional schematic view of a structure of a membrane electrode assembly for a water electrolysis cell in an embodiment.
Fig. 2 is a cross-sectional schematic view of a cathode catalytic layer of a membrane electrode assembly for a water electrolysis cell in an embodiment.
Fig. 3 is a cross-sectional schematic view of an anode catalytic layer of a membrane electrode assembly for a water electrolysis cell in an embodiment.
Fig. 4 is a cross-sectional schematic view of a water electrolysis cell in an embodiment.

### [Description of the Embodiments]

### <Embodiments>

With reference to the accompanying drawings, embodiments of the present invention will be described. The below-described embodiments do not limit the invention and are merely examples, and the present invention is not identified by features described as embodiments. Embodiments can be variously modified within the technical range specified by claims described in CLAIMS. Further, the drawings are schematic, and the relationships between the thickness and the planar dimensions, the ratio of the thicknesses of the respective layers, and the like are different from the actual ones.

### (Membrane electrode assembly 6)

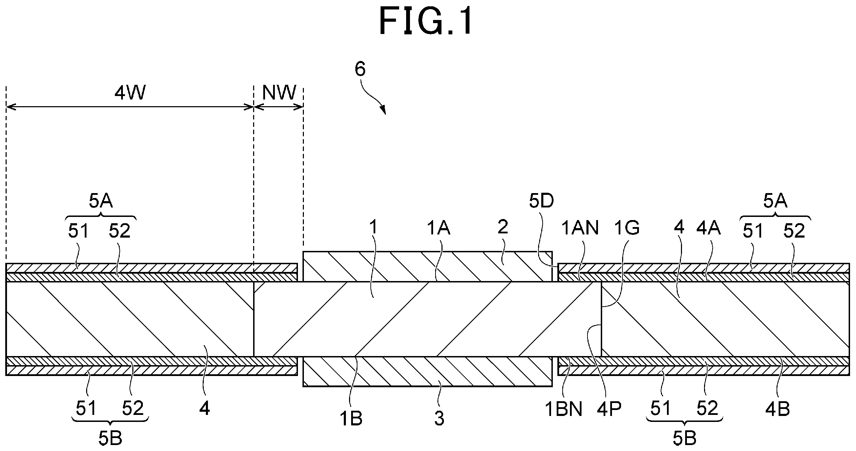

Fig. 1 is a cross-sectional view schematically illustrating a configuration example of a membrane electrode assembly 6 according to an embodiment of the present invention. The membrane electrode assembly 6 includes a polymer electrolyte membrane 1, an anode catalytic layer 2 (first electrode catalytic layer) and a cathode catalytic layer 3 (second electrode catalytic layer) respectively disposed on a first main surface 1A and a second main surface 1B of the polymer electrolyte membrane 1, an outer peripheral film 4, an adhesive film (first adhesive film) 5A, and an adhesive film (second adhesive film) 5B.

When viewed in a direction facing the first main surface of the polymer electrolyte membrane 1, the outer shape of the anode catalytic layer 2 and the outer shape of the cathode catalytic layer 3 are substantially the same, and the outer shape of the polymer electrolyte membrane 1 is larger than the outer shapes of the anode catalytic layer 2 and the cathode catalytic layer 3. Note that the outer shape of the polymer electrolyte membrane 1 and the outer shapes of the anode catalytic layer 2 and the cathode catalytic layer are not particularly limited, and, for example, may be a rectangle (including a square).

Therefore, the outer shape dimension of the polymer electrolyte membrane 1 is larger than the outer shape dimensions of the anode catalytic layer 2 and the cathode catalytic layer. For ensuring adhesion between the adhesive films 5A and 5B and the polymer electrolyte membrane 1, the outer shape dimension of the polymer electrolyte membrane 1 when the shape of the polymer electrolyte membrane 1 is a rectangle is desirably is 1.05 to 1.25 times the outer shape dimension when the anode catalytic layer 2 and the cathode catalytic layer are a rectangle in each of the length direction and the width direction, and can be adjusted according to the use environment in a water electrolysis cell.

As described above, the sizes of the anode catalytic layer 2 and the cathode catalytic layer 3 are smaller than the outer shape of the polymer electrolyte membrane 1. Therefore, annular non-covered sections 1AN and 1BN that are not covered with the anode catalytic layer 2 and the cathode catalytic layer 3 are respectively formed along the outer periphery of the polymer electrolyte membrane 1 on the first main surface 1A at the anode catalytic layer 2 side of the polymer electrolyte membrane 1 and on the second main surface 1B at the cathode catalytic layer 3 side of the polymer electrolyte membrane 1. The annular non-covered sections 1AN and 1BN may have a width NW of 10 to 100 mm.

### (Polymer electrolyte membrane)

The polymer electrolyte membrane 1 can be formed with a polymer material having proton conductivity, such as a fluorine-based electrolyte membrane and a hydrocarbon-based polymer electrolyte membrane. Examples of the fluorine-based polymer electrolyte membrane include Nafion (registered trademark) manufactured by DuPont Co., Flemion (registered trademark) manufactured by Asahi Glass Co., Ltd., Aciplex (registered trademark) manufactured by Asahi Kasei Corp., and Gore Select (registered trademark) manufactured by Gore Co. Examples of the hydrocarbon-based polymer electrolyte membrane to be used include electrolyte membranes of sulfonated polyether ketone, sulfonated polyether sulfone, sulfonated polyether ether sulfone, sulfonated polysulfide, and sulfonated polyphenylene. The polymer electrolyte membrane 1 may have a thickness of, for example, 0.05 to 0.25 mm.

### (Cathode catalytic layer 3)

The cathode catalytic layer 3 is disposed in the center of the second main surface 1B of the polymer electrolyte membrane 1. Fig. 2 is a cathode cross-sectional view schematically illustrating a configuration of the cathode catalytic layer 3 of the present embodiment. The cathode catalytic layer 3 contains a cathode catalyst particle 7, a polymer electrolyte 9, and a fibrous material 10. The cathode catalyst particle 7 is a cathode catalyst particle for performing a reduction reaction by protons in a cathode solution.

### (Cathode catalyst particle 7)

As the cathode catalyst particle 7, platinum group elements, metals, or alloys, oxides, and complex oxides of the metals can be used. Examples of the platinum group elements include platinum, palladium, ruthenium, iridium, rhodium, and osmium, and examples of the metals include iron, lead, copper, chromium, cobalt, nickel, manganese, vanadium, molybdenum, gallium, and aluminum. The complex oxide described herein refers to an oxide composed of two types of metals. When the cathode catalyst particles 7 are made of one or more metals selected from platinum, gold, palladium, rhodium, ruthenium, and iridium, electrode reactivity is excellent, and an electrode reaction can be efficiently and stably performed. The cathode catalyst particles 7 are preferably made of one or more metals selected from platinum, gold, palladium, rhodium, ruthenium, and iridium because they exhibit high activity.

The above-described catalyst is generally carried by an electron-conductive catalyst carrier 8. As the catalyst carrier 8, a carbon particle is generally used. The type of the carbon particle is not limited as long as the particle is a microparticle and electrically conductive and is not affected by the catalyst. As the carbon particle, for example, carbon black or graphite, black lead, activated carbon, carbon fiber, carbon nanotube, or fullerene can be used. The average particle size of the carbon particle is preferably within a range of 10 nm or more and 1000 nm or less, and more preferably within a range of 10 nm or more and 100 nm or less. As described herein, the term average particle size refers to an average particle size calculated from an SEM image. Carbon particles having an average particle size within a range of 10 nm or more and 1,000 nm or less are preferable because the catalytic activity and stability improve. Further, carbon particles having an average particle size within a range of 10 nm or more and 1000 nm or less are preferable because an electron-conductive path is easily formed.

### (Anode catalytic layer 2)

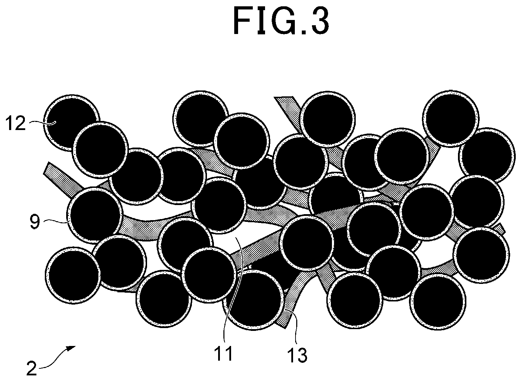

As shown in Fig. 1, the anode catalytic layer 2 is disposed in the center of the first main surface 1A of the polymer electrolyte membrane 1. Fig. 3 is a cross-sectional view schematically illustrating a configuration of the anode catalytic layer 2 of the present embodiment. The anode catalytic layer 2 contains an anode catalyst particle 12 and a polymer electrolyte 9. Further, the anode catalytic layer 2 may contain a fibrous material 10. The anode catalyst particle 12 is an anode catalyst particle for performing an oxidation reaction in an anode solution.

### (Anode catalyst particle 12)

Examples of the anode catalyst particle 12 contained in the anode catalytic layer include metals contained in the platinum group, metals other than the metals contained in the platinum group, or alloys, oxides, complex oxides, and carbides thereof. Among these, ruthenium, rhodium, palladium, iridium, platinum, and alloys containing at least one thereof have high catalytic activity and are therefore preferable. Note that the catalyst particle may be one of the above-described examples or a combination of two or more thereof.

### (Polymer electrolyte)

As the polymer electrolyte 9, one having proton conductivity is used, and the material of the polymer electrolyte membrane 1 can also be used. Examples of the polymer electrolyte 9 to be used include a fluorine-based polymer electrolyte and a hydrocarbon-based polymer electrolyte. An example of the fluorine-based polymer electrolyte is a material based on Nafion (registered trademark) manufactured by DuPont Co. Examples of the hydrocarbon-based polymer electrolyte to be used include electrolytes of sulfonated polyether ketone, sulfonated polyether sulfone, sulfonated polyether ether sulfone, sulfonated polysulfide, and sulfonated polyphenylene.

### <Fibrous material>

As the fibrous material 10 used in the cathode catalytic layer, carbon fibers and polymer fibers can be used. Examples of the carbon fibers include carbon fibers, carbon nanotubes, and carbon nanohoms. In particular, carbon fibers or carbon nanotubes are preferable in terms of electrical conductivity and dispersibility. The blending amount of carbon fibers is preferably in a range of 0.3 time or more and 1.5 times or less the mass of the carrier in the catalyst-carrying particles. When the content of carbon fibers is in the above-described numerical value range, a suitable amount of pores 11 having a suitable size can be formed in the cathode catalytic layer.

When the fibrous material 10 is carbon fibers, the average fiber diameter of the carbon fibers is preferably 300 nm or less and more preferably 200 nm or less. When the average fiber diameter of the carbon fibers is 300 nm or less, appropriate thinness for a fibrous material contained in the cathode catalytic layer can be ensured. When the average fiber diameter of the carbon fibers is 50 nm or more, appropriate thickness can be ensured so that the strength of the cathode catalytic layer is enhanced, and the effect of suppressing occurrence of cracks can be obtained.

Further, when the fibrous material 10 is carbon fibers, the average fiber length of the carbon fibers is preferably in a range of 1.0 µm or more 20 µm or less. When the average fiber length of the carbon fibers is in the above-described numerical value range, pores 11 having a suitable size can be formed in the cathode catalytic layer.

When the fibrous material 10 is polymer fibers, examples of the polymer fibers to be used include ionomer-adsorbing fibers having the property of adsorbing polymer electrolyte, electrically conductive polymer nanofibers, and proton conductive fibers. The ionomer adsorbing amount of the ionomer-adsorbing fibers is 10 mg or more per 1 g of the ionomer-adsorbing fibers, and polymer fibers having at least one cation exchange group, for example, are used. Use of the proton-conducting fibers may improve proton conductivity. The proton-conducting fibers are polymer fibers obtained by processing a proton conductive polymer electrolyte into fibers. As the material for forming the proton-conducting fibers, a fluorine-based polymer electrolyte, a hydrocarbon-based polymer electrolyte, and the like can be used. In addition, polymer fibers in which a cation exchange group such as a hydroxyl group, a carbonyl group, a sulfonic acid group, a phosphorous acid group, or an amino group is added to a terminal group of a polymer structure can be used. The amount of ionomers adsorbed to the ionomer-adsorbing fibers can be calculated by bringing the ionomer-adsorbing fibers into contact with a dispersion liquid in which ionomers are dispersed at a predetermined concentration, filtering the obtained product through a predetermined filter (for example, aperture: 0.3 to 0.5 µm), and measuring the concentration of ionomers contained in the filtrate. Use of proton-conducting fibers may improve proton conductivity.

The blending amount of polymer fibers is preferably in a range of 0.05 time or more and 0.3 time or less the mass of the carrier in the catalyst-carrying particles. When the content of polymer fibers is in the above-described numerical value range, a suitable amount of pores 11 having a suitable size can be formed in the cathode catalytic layer.

When the fibrous material 10 is polymer fibers, the average fiber diameter of the polymer fibers is preferably 500 nm or less and more preferably 400 nm or less. When the average fiber diameter of polymer fibers is 500 nm or less, appropriate thinness for a fibrous material contained in the cathode catalytic layer can be ensured. When the average fiber diameter of polymer fibers is 100 nm or more, appropriate thickness can be ensured so that the strength of the cathode catalytic layer is enhanced, and the effect of suppressing occurrence of cracks can be obtained.

Further, when the fibrous material 10 is polymer fibers, the average fiber length of the polymer fibers is preferably in a range of 1.0 µm or more and 40 µm or less. When the average fiber length of polymer fibers is in the above-described numerical value range, pores 11 having a suitable size can be formed in the cathode catalytic layer.

Further, only one of these fibrous materials may be used alone, or two or more thereof may be used in combination, or conductive fibers and polymer fibers may be used in combination.

Examples of a fibrous material 13 used in the anode catalytic layer include ionomer-adsorbing fibers having the property of adsorbing a polymer electrolyte, electrically conductive polymer nanofibers, and proton conductive fibers. The same material as the polymer fibers used in the cathode catalytic layer can also be used.

The blending amount of the fibrous material 13 is preferably in a range of 0.005 time or more and 0.2 time or less the mass of the catalyst particles. When the content of the fibrous material 13 is in the above-described numerical value range, a suitable amount of pores 11 having a suitable size can be formed in the anode catalytic layer.

The average fiber diameter of the fibrous material 13 is preferably 500 nm or less and more preferably 400 nm or less. When the average fiber diameter of the polymer fibers is 500 nm or less, appropriate thinness for a fibrous material contained in the anode catalytic layer can be ensured. When the average fiber diameter of the polymer fibers is 100 nm or more, appropriate thickness can be ensured so that the strength of the anode catalytic layer is enhanced, and the effect of suppressing occurrence of cracks can be obtained.

The average fiber length of the fibrous material 13 is preferably in a range of 1.0 µm or more and 40 µm or less. When the average fiber length of polymer fibers is in the above-described numerical value range, pores 11 having a suitable size can be formed in the anode catalytic layer.

### (Outer peripheral film)

As shown in Fig. 1, an outer peripheral film 4 is disposed to surround an outer peripheral surface 1G of the polymer electrolyte membrane 1 and has an annular shape. The outer peripheral film 4 has an opening 4P corresponding to the outer shape of the polymer electrolyte membrane 1, and the polymer electrolyte membrane 1 is accommodated in the opening 4P of the outer peripheral film 4. The outer shape of the opening 4P of the outer peripheral film 4 may be a shape corresponding to the outer shape of the polymer electrolyte membrane 1, for example, a rectangular (including a square).

The outer shape of the outer peripheral film 4 is also not particularly limited and may be rectangular (including a square) or the like.

The distance between the opening 4P of the outer peripheral film 4 and the outer peripheral surface 1G of the polymer electrolyte membrane 1 is preferably 20 mm or less.

The width 4W in the radial direction of the ring of the outer peripheral film 4 is not particularly limited, but can be, for example, 100 to 300 mm.

The thickness of the outer peripheral film 4 is preferably within ±10% of the thickness of the polymer electrolyte membrane 1. This reduces a height difference between the main surface of the outer peripheral film 4 and the main surface of the polymer electrolyte membrane 1, with the result that sealing properties against liquid are excellent when the membrane electrode assembly 6 is sandwiched by gaskets and separators as described later.

The outer peripheral film 4 may be, for example, a resin film. Examples of resins include polyethylene terephthalate and polyurethane. The material of the outer peripheral film 4 preferably does not contain polymer electrolyte. An outer peripheral film 4 made of polyurethane is likely to follow swelling or deformation of the polymer electrolyte membrane. An outer peripheral film made of polyethylene terephthalate has excellent strength.

### (Adhesive films 5A and 5B)

Adhesive films 5A and 5B each have a substrate layer 51 and an adhesive agent layer 52. An example of the substrate layer 51 is a resin film of polyethylene terephthalate, polyurethane, or the like. The substrate layer 51 may have a thickness of 25 to 100 µm. A substrate layer 51 made of polyurethane is likely to follow swelling or deformation of the polymer electrolyte membrane. A substrate layer 51 made of polyethylene terephthalate has excellent strength.

Examples of the adhesive agent layer 52 is an acrylic-based adhesive agent layer, a urethane-based adhesive agent layer, and a rubber-based adhesive agent layer. The adhesive agent layer 52 may have a thickness of 5 to 25 µm.

The adhesive agent layer 52 of the adhesive film 5Ais adhered to the annular non-covered section 1AN of the polymer electrolyte membrane 1 and to a main surface 4A of the outer peripheral film 4 at the same side as the first main surface 1A of the polymer electrolyte membrane 1.

The adhesive agent layer 52 of the adhesive film 5B is adhered to the annular non-covered section 1BN of the polymer electrolyte membrane 1 and to a main surface 4B of the outer peripheral film 4 at the same side as the second main surface 1B of the polymer electrolyte membrane 1.

Since the adhesive films 5A and 5B are respectively adhered to regions covering the annular non-covered sections 1AN and 1BN of the polymer electrolyte to the main surfaces of the outer peripheral film 4, the polymer electrolyte membrane 1 and the outer peripheral film 4 are fixed.

The thickness of the adhesive films 5A and 5B is not particularly limited but is preferably 30 to 125 µm. The thickness of the adhesive films 5A and 5B is preferably smaller than the thickness of each of the cathode catalytic layer 3 and the anode catalytic layer 2.

The peeling strength of the adhesive films 5A and 5B is preferably 0.3 N/25 mm or more with a polyimide film. In this case, the peeling of the adhesive films 5A and 5B can be suppressed when producing the membrane electrode assembly 6 (when coating an ink of an electrode catalytic layer), when assembling a water electrolysis cell using the membrane electrode assembly, or when using the water electrolysis cell.

The adhesive films 5A and 5B preferably have an annular shape when viewed in the thickness direction. The adhesive films 5A and 5B may have an annular shape having an opening 5D in the center. The adhesive films 5A and 5B preferably have an annular shape with the opening 5D having a diameter that is equal to or more than those of the anode catalytic layer 2 and the cathode catalytic layer 3. The outer shape of the adhesive films 5A and 5B can be a rectangle (including a square) equivalent to the outer shape of the outer peripheral film 4. In a state of being adhered to the polymer electrolyte membrane 1, the opening 5D of each of the adhesive films 5A and 5B is preferably not in contact with the anode catalytic layer 2 and the cathode catalytic layer 3.

Note that the adhesive films 5A and 5B cover at least part of the respective main surfaces of the outer peripheral film 4, but preferably cover the whole of the main surfaces of the outer peripheral film 4.

### (Method of producing membrane electrode assembly)

### (Method of producing electrode catalytic layer)

The anode catalytic layer 2 and the cathode catalytic layer 3 of the present embodiment can be produced by preparing a slurry for an electrode catalytic layer, coating a substrate or the like with the slurry, and drying the coat.

### (Preparation of slurry for electrode catalytic layer)

Components constituting the electrode catalytic layer, i.e., a catalyst, a polymer electrolyte, and a fibrous material, are mixed using a dispersion medium to prepare a catalyst ink.

The solvent used as the dispersion medium of the catalyst ink is not particularly limited as long as it does not erode the components constituting the electrode catalytic layer, and can dissolve the polymer electrolyte in a highly fluid state or disperse the polymer electrolyte as a fine gel. However, the solvent preferably contains at least a volatile organic solvent. The solvent used as the dispersion medium of the catalyst ink may be water, alcohols, ketone-based solvents, ether-based solvents, polar solvents, and the like. Specifically, the solvent may be water, alcohols such as methanol, ethanol, 1-propanol, 2-propanol, 1-butanol, 2-butanol, isobutyl alcohol, and tert-butyl alcohol, ketones such as acetone, methyl ethyl ketone, methyl butyl ketone, methyl isobutyl ketone, methyl amyl ketone, pentanone, heptanone, cyclohexanone, methyl cyclohexanone, acetonylacetone, diethyl ketone, dipropyl ketone, and diisobutyl ketone, ether-based solvents such as tetrahydrofuran, dioxane, diethylene glycol dimethyl ether, anisole, methoxy toluene, and dibutyl ether, and polar solvents such as dimethylformamide, dimethylacetamide, N-methylpyrrolidone, ethylene glycol, diethylene glycol, diacetone alcohol, and 1-methoxy-2-propanol. The solvent may be a mixture of two or more of the above-described materials.

Since a dispersion medium including lower alcohol has a high risk of ignition, it is preferable to use a mixed solvent of lower alcohol and water when using lower alcohol as the dispersion medium. The dispersion medium may contain water which blends well with ionomers, i.e., water which has a high affinity for ionomers. The amount of water added in the dispersion medium is not particularly limited unless ionomers separate to cause white turbidity or gelation. The catalyst ink may contain a dispersant for dispersing, in the catalyst ink, carbon particles by which the catalyst is carried.

The catalyst ink may be subjected to a dispersion treatment as necessary. The dispersion treatment is not particularly limited as long as components contained in the catalyst ink can be dispersed. Examples of the dispersion treatment include a treatment by a planetary ball mill or a roll mill, a treatment by a shear mill, a treatment by a wet mill, an ultrasonic dispersion treatment, and a treatment by a homogenizer.

### (Coating and drying to substrate)

The electrode catalytic layer is formed by coating a substrate with the catalyst ink and thereafter performing a drying treatment to volatilize the dispersion medium.

An example of the substrate used when forming the anode catalytic layer 2 and the cathode catalytic layer 3 is a transfer substrate which is to be peeled after the anode catalytic layer 2 and the cathode catalytic layer 3 have been transferred on the polymer electrolyte membrane 1. An example of the transfer substrate used is a resin film. The polymer electrolyte membrane 1 may also be used as the substrate used when forming the anode catalytic layer 2 and the cathode catalytic layer 3.

The method of coating a substrate with the slurry for an electrode catalytic layer is not particularly limited but may be, for example, doctor blading, die coating, dipping, screen printing, laminator roll coating, or spraying.

Examples of the method for drying the slurry for an electrode catalytic layer applied on the substrate include hot-air drying and IR drying. The drying temperature of the slurry for an electrode catalytic layer is in a range of 40°C or higher and 200°C or lower and preferably in a range of 40°C or higher and 120°C or lower. The drying time of the slurry for an electrode catalytic layer is 0.5 minute or more and within 1 hour and preferably 1 minute or more and within 30 minutes.

In a production method using the polymer electrolyte membrane 1 as the substrate used when forming the anode catalytic layer 2 and the cathode catalytic layer 3, the anode catalytic layer 2 and the cathode catalytic layer 3 are directly formed on the surfaces of the polymer electrolyte membrane 1. This enhances adhesion of the polymer electrolyte membrane 1 with the anode catalytic layer 2 and the cathode catalytic layer 3 and eliminates the need of pressing for bonding the anode catalytic layer 2 and the cathode catalytic layer 3, so that the anode catalytic layer 2 and the cathode catalytic layer 3 (the pores 11) are prevented from being crushed. Therefore, as the substrate for forming the anode catalytic layer 2 and the cathode catalytic layer 3, the polymer electrolyte membrane 1 is preferably used.

Since the polymer electrolyte membrane 1 generally has the property of swelling and shrinking greatly, the volume change of the substrate in the drying step of the coating film to form the anode catalytic layer 2 and the cathode catalytic layer 3 is larger when the polymer electrolyte membrane 1 is used as the substrate than when a transfer substrate is used as the substrate. Therefore, when the electrode catalytic layer is configured to contain no fibrous material, cracks are likely to occur in the electrode catalytic layers. On the other hand, when the electrode catalytic layer contains a fibrous material, occurrence of cracks is suppressed because a fibrous material is contained, even if the volume of the polymer electrolyte membrane 1 as the substrate greatly changes in the step of preparing the anode catalytic layer 2 and the cathode catalytic layer 3, so that a production method using the polymer electrolyte membrane 1 as the substrate for forming the anode catalytic layer 2 and the cathode catalytic layer 3 can be adopted.

As described above, the sizes of the anode catalytic layer 2 and the cathode catalytic layer 3 are smaller than the outer shape of the polymer electrolyte membrane 1. Therefore, annular non-covered sections 1AN and 1BN that are not covered with the anode catalytic layer 2 and the cathode catalytic layer 3 are respectively formed along the outer periphery of the polymer electrolyte membrane 1 on the first main surface 1A at the anode catalytic layer 2 side of the polymer electrolyte membrane 1 and at the second main surface 1B at the cathode catalytic layer 3 side of the polymer electrolyte membrane 1.

After the anode catalytic layer 2 and the cathode catalytic layer 3 have been formed such that they sandwich the polymer electrolyte membrane 1 as described above, a membrane electrode assembly 6 is prepared by, as shown in Fig. 1, disposing the outer peripheral film 4 outside the outer peripheral surface of the polymer electrolyte membrane 1 and adhering the adhesive films 5A and 5B to a range covering the annular non-covered sections 1AN and 1BN of the polymer electrolyte membrane 1 to the main surfaces 4A and 4B of the outer peripheral film 4 respectively. Note that there is no problem in bonding the polymer electrolyte membrane 1 and the outer peripheral film 4 with the adhesive films 5A and 5B before forming the anode catalytic layer 2 and the cathode catalytic layer 3.

As the outer peripheral film 4 and the adhesive films 5A and 5B, a resin film, for example, is used. The adhesive films 5A and 5B are hollowed out to have an opening with a shape that is the same as the anode catalytic layer 2 and the cathode catalytic layer 3 or with an outer shape that is larger than the anode catalytic layer 2 and the cathode catalytic layer 3, so as not to be in contact with the anode catalytic layer 2 and the cathode catalytic layer 3.

As described above, the adhesive films 5A and 5B are adhered so as not to be in contact with the anode catalytic layer 2 and the cathode catalytic layer 3 formed to the polymer electrolyte membrane 1. Therefore, the outer shape dimension of the polymer electrolyte membrane 1 is larger than the outer shape dimensions of the anode catalytic layer 2 and the cathode catalytic layer 3. For ensuring adhesion between the adhesive films 5A and 5B and the polymer electrolyte membrane 1, the outer shape dimension of the polymer electrolyte membrane 1 having a rectangular shape is desirably 1.05 to 1.25 times the outer shape dimension of the anode catalytic layer 2 and the cathode catalytic layer 3 having a rectangular shape in each of the length direction and the width direction, and is adjusted according to the use environment in a water electrolysis cell.

The forming order of the anode catalytic layer 2 and the cathode catalytic layer 3 is not limited, but it is preferable to adhere a resin film such as a PET film to a region in which an electrode catalytic layer is to be formed later, in a step of firstly forming an electrode catalytic layer. This is expected to have the effect of suppressing swelling and deformation of the polymer electrolyte membrane caused by dropping of the catalyst ink.

Note that although the adhesive film is adhered to both the first main surface 1A and the second main surface 1B in the above-described embodiment, implementation is possible even if the adhesive film is adhered to only one of the surfaces.

### (Water electrolysis cell)

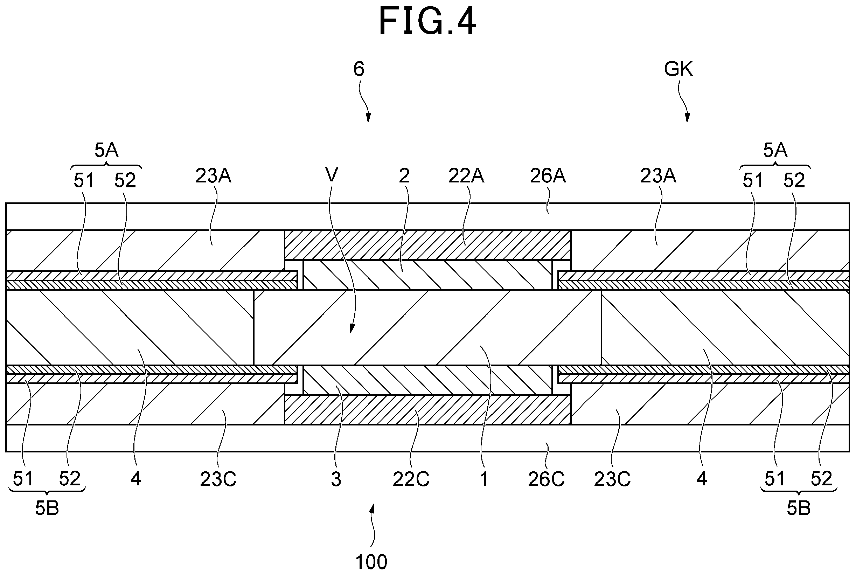

Next, a water electrolysis cell 100 including the above-described membrane electrode assembly 6 will be described with reference to Fig. 4.

The water electrolysis cell 100 includes the above-described membrane electrode assembly 6, a gas diffusion layer 22A at the anode side (at the oxygen-generating anode side), a gas diffusion layer 22C at the cathode side (hydrogen-generating cathode side), a pair of annular gaskets 23A and 23C, and a pair of separators 26A and 26C.

The gas diffusion layer 22A at the anode side is disposed on the anode catalytic layer 2. The gas diffusion layer 22A at the anode side may be an electrically conductive porous material such as a Ti sintered plate.

The gas diffusion layer 22C at the cathode side is disposed on the cathode catalytic layer 3. The gas diffusion layer 22C at the cathode side may be an electrically conductive porous material such as a carbon paper.

The separator 26A is disposed on the top of the gas diffusion layer 22A at the anode side, and the separator 26C is disposed on the bottom of the gas diffusion layer 22C at the cathode side.

The separators 26A and 26C each have unillustrated grooves through which fluid such as generated gas, water vapor, or cooling water can circulate. The material of the separators 26A and 26C is, for example, an electric conductor such as a metal material and is preferably impermeable to gas and liquid.

The outer shape of the separators 26A and 26C corresponds to the outer shape of the outer peripheral film 4 (for example, a rectangle). Therefore, annular gaskets 23A and 23C are respectively disposed between the adhesive film 5A and the separator 26A and between the adhesive film 5B and the separator 26C.

The annular gasket 23A has an opening in the center, the anode catalytic layer 2 and the gas diffusion layer 22A at the anode side can be accommodated in the opening, and the annular gasket 23A does not overlap the cathode catalytic layer 3 and the gas diffusion layer 22C at the cathode side.

The annular gasket 23C has an opening in the center, the cathode catalytic layer 3 and the gas diffusion layer 22C at the cathode side can be accommodated in the opening, and the annular gasket 23C does not overlap the cathode catalytic layer 3 and the gas diffusion layer 22C at the cathode side.

Therefore, the annular gaskets 23A and 23C can exert the function of preventing liquid such as water from leaking.

The material of the annular gaskets 23A and 23C can be, for example, EPDM (ethylene propylene diene rubber).

The thickness of the annular gasket 23A can be appropriately set such that the ratio of the total thickness of the adhesive film 5A and the annular gasket 23A to the total thickness of the anode catalytic layer 2 and the gas diffusion layer 22A at the anode side is 0.9 to 1.1. This ratio may be 0.95 to 1.05.

The thickness of the annular gasket 23C can be appropriately set such that the ratio of the total thickness of the adhesive film 5B and the annular gasket 23C to the total thickness of the cathode catalytic layer 3 and the gas diffusion layer 22C at the cathode side is 0.9 to 1.1. This ratio may be 0.95 to 1.05.

The water electrolysis cell 100 is an example of a single cell, but may has a cell stack structure in which a plurality of the single cells is stacked.

In the present embodiment, the polymer electrolyte membrane 1, the anode catalytic layer 2, the gas diffusion layer 22A at the anode side, the cathode catalytic layer 3, and the gas diffusion layer 22C at the cathode side are accommodated in a space V formed by the separator 26A, the separator 26C, and a gasket structure GK, and are sealed by the gasket structure GK such that liquid does not leak from the space V. The gasket structure GK is a laminate containing the annular gasket 23C, the adhesive film 5B, the outer peripheral film 4, the adhesive film 5A, and the annular gasket 23A.

In such a water electrolysis cell 100, water passes through the gas passage of the separator 26A and the gas diffusion layer 22A at the anode side and is supplied to the anode catalytic layer 2 and the cathode catalytic layer 3, voltage is applied to the anode catalytic layer 2 and the cathode catalytic layer 3 so that oxygen gas is generated from water in the anode catalytic layer 2, and hydrogen gas is generated from water in the cathode catalytic layer 3, and the obtained gas passes through the gas passages of the separators 26A and 26C and is separated and removed outside the water electrolysis cell 100.

### (Effects)

According to the membrane electrode assembly 6 having the above-described configuration, the outer peripheral film 4 in a state of being assembled to the water electrolysis cell 100 can function as part of the gasket structure GK that prevents liquid from leaking between the separators 26A and 26C, as shown in Fig. 4. Therefore, the amount of the polymer electrolyte material used in the gasket structure GK can be suppressed compared to previously. Further, since the outer peripheral film 4 and the annular non-covered sections 1AN and 1BN are respectively fixed by the adhesive films 5A and 5B as shown in Fig. 1, handleability of the membrane electrode assembly 6 when, for example, assembling the membrane electrode assembly 6 to the water electrolysis cell 100 improves.

Hereinafter, examples based on the present invention will be described, but the present embodiment is not limited by Examples and Comparative Examples described below.

### (Example 1)

First, an annular PET film with a thickness of 188 µm as the outer peripheral film 4 was disposed to surround the outer periphery of a Nafion (registered trademark) membrane (thickness: 180 to 200 µm) as the polymer electrolyte membrane 1. Next, a 25 µm thick annular adhesive PET film having an opening with the same size as the outer shape of the anode catalytic layer 2 and the cathode catalytic layer and having an outer shape with the same size of the outer shape of the outer peripheral film 4, as the adhesive film 5A, was bonded to the first main surface 1A of the polymer electrolyte membrane 1 and the main surface 4A in the outer peripheral film 4 at the same side as the first main surface 1A. Furthermore, the same annular adhesive PET film, as the adhesive film 5B, was bonded to the second main surface 1B of the polymer electrolyte membrane 1 and the main surface 4B in the outer peripheral film 4 at the same side as the second main surface 1B to prepare a coating substrate. The outer shape of the prepared Nafion (registered trademark) membrane had a dimension that is 1.1 times the outer shape of the anode and cathode catalytic layers in each of the length direction and the width direction.

Each of the annular adhesive PET films was bonded to a range covering the annular non-covered section 1AN or 1BN of the Nafion (registered trademark) membrane and the main surface 4A or 4B of the outer peripheral film 4.

The bonding condition was a temperature of 23 ± 2°C, a pressure of 0.1 MPa, and a speed of 2 m/min. The peeling strength of the adhesive PET film was measured as a 180-degree peeling strength under the conditions in accordance with JIS Z 0237 in the environment of a temperature of 23 ± 2°C and a relative humidity of 65 ± 5%RH. The result was 0.35 N/25 mm for a polyimide film.

Next, a Nafion (registered trademark) dispersion liquid (manufactured by Wako Pure Chemical Industries, Ltd.) as the polymer electrolyte and carbon fibers as the fibrous material were added to a TEC61E54 PtRu/C catalyst (manufactured by Tanaka Kikinzoku Kogyo K.K.) powder, and a solvent was appropriately used to prepare a catalyst ink for a cathode catalytic layer. The blending amount of the fibrous material was determined to be 1.0 time the mass of the carrier in the catalyst-carrying particles. It was confirmed that the carbon fibers had an average fiber diameter of 150 nm.

The obtained slurry for a cathode catalytic layer was applied to one surface of the prepared substrate by die coating such that the total amount of Pt and Ru carried per electrode area was 0.5 mg/cm². Thereafter, the coat was dried in a furnace at 80°C to obtain a laminate in which a cathode catalytic layer was formed on one surface of the polymer electrolyte membrane.

Next, a Nafion (registered trademark) dispersion liquid (manufactured by Wako Pure Chemical Industries, Ltd.) as the polymer electrolyte and polymer fibers as the fibrous material were added to an iridium oxide powder, and a solvent was appropriately used to prepare a catalyst ink for an anode catalytic layer. The blending amount of the fibrous material was determined to be 0.01 time the mass of the anode catalytic layer. It was confirmed that the fibrous material had an average fiber diameter of 400 nm.

The obtained slurry for an anode catalytic layer was applied to a surface of the prepared substrate on which the PtRu catalytic layer was not formed by die coating such that the total amount of iridium oxide carried per electrode area was 1.0 mg/cm². Thereafter, the coat was dried in a furnace at 80°C to obtain a membrane electrode assembly for a water electrolysis cell.

### (Example 2)

A membrane electrode assembly for a water electrolysis cell was obtained in the same procedure as in Example 1, except that an adhesive PET film having a peeling strength for a polyimide film of 0.10 N/25 mm was used.

### (Example 3)

A membrane electrode assembly for a water electrolysis cell was obtained in the same procedure as in Example 1, except that an adhesive PET film having a peeling strength for a polyimide film of 0.28 N/25 mm was used.

### (Example 4)

A membrane electrode assembly for a water electrolysis cell was obtained in the same procedure as in Example 1, except that a polyurethane film was used instead of a PET film as the outer peripheral film 4, and a polyurethane film was used instead of a PET film as the substrate layer 51 of the adhesive films 5A and 5B. The peeling strength of the adhesive film for a polyimide film was the same as in Example 1.

### (Evaluation 1: Presence or absence of peeling of adhesive film from substrate (polymer electrolyte membrane) during coating with ink of electrode catalytic layer)

The presence or absence of peeling of the adhesive film from the substrate during membrane formation of the electrode catalytic layer was visually determined. When the polymer electrolyte membrane swells due to the solvent in the catalyst ink for an electrode catalytic layer, the adhesive film sometimes peels from the polymer electrolyte membrane.

### (Evaluation 2: Presence or absence of peeling of adhesive film after immersion in water)

After membrane formation of the electrode catalytic layer, the membrane electrode assembly was immersed in water for 3 minutes, and thereafter removed from the water to visually determine the presence or absence of peeling of the adhesive film from the substrate (polymer electrolyte membrane). When the polymer electrolyte membrane swells due to water, the adhesive film sometimes peels from the polymer electrolyte membrane. The result is shown in Table 1.

**[Table 1]**

| Table 1 | Peeling during coating | Peeling during immersion |
|---|---|---|
| Example 1 | No | No |
| Example 2 | Yes | - |
| Example 3 | No | Yes |
| Example 4 | No | No |

In all of the Examples, a membrane electrode assembly in which the used amount of a polymer electrolyte membrane is small could be achieved by adopting the outer peripheral film and the adhesive film. When the peeling strength of the adhesive film is high, peeling also can be suppressed. When a polyurethane film was adopted as the outer peripheral film 4 and the substrate layer 51 of the adhesive films 5A and 5B, it easily follows swelling and deformation of the polymer electrolyte membrane.

### [Industrial Applicability]

According to the present invention, a membrane electrode assembly in which the amount of a polymer electrolyte membrane used is small can be formed, and therefore industrial applicability thereof is high. The present invention is extremely suitable for production of a membrane electrode assembly for a water electrolysis cell.

### [Reference Signs List]

1 ... Polymer electrolyte membrane
1AN ... Annular non-covered section (first annular non-covered section)
1BN ... Annular non-covered section (second annular non-covered section)
2 ... Anode catalytic layer
3 ... Cathode catalytic layer
4 ... Outer peripheral film
5A, 5B ... Adhesive film
6 ... Membrane electrode assembly
7 ... Cathode catalyst particle
8 ... Catalyst carrier
9 ... Polymer electrolyte
10 ... Fibrous material for cathode
11 ... Pore
12 ... Anode catalyst particle
13 ... Fibrous material for anode
100 ... Water electrolysis cell

## Claims

1. A membrane electrode assembly for a water electrolysis cell, comprising:
a polymer electrolyte membrane having a first main surface and a second main surface;
a first electrode catalytic layer disposed on the first main surface of the polymer electrolyte membrane;
a second electrode catalytic layer disposed on the second main surface of the polymer electrolyte membrane;
an annular outer peripheral film disposed to surround an outer peripheral surface of the polymer electrolyte membrane; and
a first adhesive film having a substrate layer and an adhesive agent layer, wherein
the first main surface of the polymer electrolyte membrane has a first annular non-covered section that is not covered with the first electrode catalytic layer along an outer periphery of the first main surface, and
the adhesive agent layer of the first adhesive film is adhered to the first annular non-covered section of the polymer electrolyte membrane and to a main surface of the outer peripheral film at the same side as the first main surface of the polymer electrolyte membrane.

2. The membrane electrode assembly for a water electrolysis cell according to claim **1,** further comprising a second adhesive film having a substrate layer and an adhesive agent layer, wherein
the second main surface of the polymer electrolyte membrane has a second annular non-covered section that is not covered with the second electrode catalytic layer along an outer periphery of the second main surface, and
the adhesive agent layer of the second adhesive film is adhered to the second annular non-covered section of the polymer electrolyte membrane and to a main surface of the outer peripheral film at the same side as the second main surface of the polymer electrolyte membrane.

3. The membrane electrode assembly for a water electrolysis cell according to claim 1 or 2, wherein the outer peripheral film has a thickness that is within ±10% of a thickness of the polymer electrolyte membrane.

4. The membrane electrode assembly for a water electrolysis cell according to claim 1 or 2, wherein each of the adhesive films has a peeling strength of 0.3 N/25 mm or more with a polyimide film.

5. A water electrolysis cell comprising the membrane electrode assembly for a water electrolysis cell according to claim 1 or 2.
